# EUROPEAN PATENT SPECIFICATION

(11) **EP 3 844 565 B1**
(45) Date of publication and mention of the grant of the patent: **17.08.2022**
(21) Application number: 19756381.0
(22) Date of filing: 27.08.2019
(51) Int. Cl.: G02F 1/1341

(54) **METHOD AND APPARATUS FOR FILLING LIQUID CRYSTAL CELLS WITH A MEDIUM COMPRISING AT LEAST ONE LIQUID CRYSTALLINE MATERIAL**
VERFAHREN UND VORRICHTUNG ZUM FÜLLEN VON FLÜSSIGKRISTALLZELLEN MIT EINEM MEDIUM, DAS MINDESTENS EIN FLÜSSIGKRISTALLINES MATERIAL ENTHÄLT
PROCÉDÉ ET APPAREIL DE REMPLISSAGE DE CELLULES À CRISTAUX LIQUIDES AVEC UN MILIEU CONTENANT AU MOINS UNE SUBSTANCE CRISTALLINE LIQUIDE

(30) Priority: 29.08.2018 EP 18191490
(43) Date of publication of application: 07.07.2021
(73) Proprietor: Merck Patent GmbH, 64293 Darmstadt (DE)
(72) Inventor: VAN DEN HEUVEL, Ronald, 5507 MH VELDHOVEN (NL); BIJKER, Martin, 5709 KR HELMOND (NL)
(86) International application number: PCT/EP2019/072752
(87) International publication number: WO 2020/043681

(56) References cited:
- JP-A- S62 231 213
- US-A1- 2002 039 168
- US-A1- 2004 141 144

## Description

The invention relates to a method for filling liquid crystal cells with a medium comprising at least one liquid crystalline material, the liquid crystal cells comprising two substrates joined together with a peripheral seal so that a cavity is formed, wherein the liquid crystal cells comprise at least one fill opening. Further aspects of the invention relate to an apparatus for filling a liquid crystal cell with a medium comprising at least one liquid crystalline material and to the use of an oxygen sensor in a process for filling liquid crystal cells with a medium comprising at least one liquid crystalline material.

The review article by R. Baetens et al. "Properties, requirements and possibilities of smart windows for dynamic daylight and solar energy control in buildings: A state-of-the-art review", Solar Energy Materials & Solar Cells 94 (2010) pages 87-105 describes tintable smart windows. Smart windows can make use of several technologies for modulating the transmittance of light such as devices based on electrochromism, liquid crystal devices and electrophoretic or suspended-particle devices. Liquid crystal based devices employ a change in the orientation of liquid crystal molecules between two conductive electrodes by applying an electric field which results in a change of their transmittance.

Known liquid crystal devices such as LCD display devices and liquid crystal based smart windows comprise two substrates with a liquid crystal layer sandwiched between the two substrates. In order to form a liquid crystal cell, the two substrates are arranged parallel to each other and the two substrates are joined by a peripheral seal such that a cavity between the two substrates is formed. At least one fill opening is arranged in the peripheral seal to allow filling of the cavity with a medium comprising at least one liquid crystalline material. After filling of the cavity, the at least one fill opening (or fill port) is sealed.

US 4,099,550 discloses an apparatus for filling a liquid crystal cell of a liquid crystal display device. The liquid crystal cell is provided with a filling port and the apparatus comprises a vacuum tank and a holder for supporting a plurality of cells. The apparatus further comprises a holder for the liquid crystal which includes capillary passages for the liquid crystal. The vacuum tank is evacuated and the capillary passages are brought in contact with the filling ports of the cells. Subsequently, an inert gas is introduced into the vacuum tank thereby filling the liquid crystal into the cells through the filling ports.

US 5,725,032 describes a method for filling a liquid crystal cell with liquid crystal. The method comprises the step of placing the cell having a cavity and inlet openings in its top and bottom edges in a vacuum chamber which encloses upper and lower liquid crystal supply members each having a liquid crystal impregnated yarn exposed through a slot therein. The vacuum chamber is evacuated, the liquid crystal supply members are brought into contact with the top and bottom inlet openings and the chamber is returned to an atmospheric pressure. Returning the chamber to atmospheric pressure causes liquid crystal to be sucked into the cavity through the inlet openings. US 2002/039168 A1, US 2004/141144 A1 and JP S62 231213 A constitute prior art relevant to the invention. The two-part form of claim 1 is based on US 2002/039168 A1.

Liquid crystal devices intended to be used as smart windows are large devices and thus the volume of the cavity formed by the two substrates is large compared to the size of the fill openings. The gap size of the cavity of usually about 10 µm to 50 µm is small compared to the size of the fill openings which usually have a width of about 25 mm to 40 mm. When the liquid crystal cell is placed into a vacuum chamber and the vacuum chamber is evacuated, air trapped inside the cavity may only be released through the fill openings. While the vacuum chamber may be evacuated quickly, the speed of evacuation of the cavities is limited. There may be a significant amount of air remaining inside the cells even so the pressure in the vacuum chamber outside of the cavities would indicate sufficient evacuation. If filling of the cells is started to early, trapped air inside the cells may cause visible defects in the liquid crystal device.

In order to avoid such defects, it is common to continue evacuation for a certain amount of time even though a pressure sensor would indicate a sufficiently low pressure and thus completion of evacuation. This waiting time slows down the filling process.

It is an object of the invention to provide a method for filling liquid crystal cells with a medium comprising at least one liquid crystalline material wherein a sufficient evacuation can be determined and thus unnecessary wait times may be avoided.

A further object of the invention may be seen in providing a method for filling liquid crystal cells with a medium comprising at least one liquid crystalline material wherein the pressure inside the cavities is controlled.

A method for filling liquid crystal cells with a medium comprising at least one liquid crystalline material is proposed. The liquid crystal cells comprise two substrates joined together with a peripheral seal so that a cavity is formed, wherein the liquid crystal cells comprise at least one fill opening.

In a first step a) of the method at least one liquid crystal cell is placed inside a vacuum chamber. In a subsequent step b) the vacuum chamber is evacuated. After evacuation has been completed, the at least one fill opening of the at least one liquid crystal cell is contacted with the medium comprising at least one liquid crystalline material in a step c). In a subsequent step d) the pressure in the vacuum chamber is raised, wherein the rising pressure in the vacuum chamber causes the medium to fill the cavity inside the at least one liquid crystal cell.

In the proposed method a signal indicating the amount of oxygen remaining inside the vacuum chamber is provided by means of an oxygen sensor mounted inside the vacuum chamber and completion of the evacuation of the vacuum chamber is determined based on said signal.

The medium comprising at least one liquid crystalline material is preferably in a liquid state. The medium may comprise a single liquid crystalline material or a mixture of two or more liquid crystalline materials.

The liquid crystal cell is, for example, a liquid crystal cell device suitable for a switchable window. Further, the liquid crystal cell may be a cell suitable for a liquid crystal display (LCD). The substrates are preferably of rectangular shape wherein the length of the sides of the rectangle may be in the range of from 20 cm to 500 cm, especially preferred in the range of from 50 cm to 400 cm and most preferred in the range of from 100 cm to 250 cm. Substrates can be of arbitrary shape, wherein rectangular shape is the most common shape.

The substrates are preferably optically transparent. The two substrates may be independently selected from a polymer or a glass. Suitable glass substrates include, for example, float glass, downdraw glass, chemically or heat treated toughened glass, borosilicate glass and aluminosilicate glass.

Suitable polymer substrates include, for example, polyethylene terephthalate (PET), polyethylene naphthalate (PEN), polyvinylbutyral (PVB), polymethyl methacrylate (PMMA), polycarbonate (PC), polyimide (PI), COP (cyclic olefin polymers) and cellulose triacetate (TAC).

The two substrates are arranged as a cell wherein a gap is formed by the two substrates. The size of the gap is preferably from 1 µm to 300 µm, preferably from 3 µm to 100 µm and more preferably from 5 µm to 100 µm, and most preferably from 10 µm to 50 µm. The cell is usually sealed by means of glue lines located at or near the edges.

After the cavity has been filed with the medium, the at least one fill opening (or fill port) is sealed and the liquid crystal cell is completed.

It is possible to process only a single cell at one time. Preferably two or more liquid crystal cells are processed simultaneously in the same vacuum chamber. Preferably, between 2 and 200 liquid crystal cells and more preferably, between 10 and 120 liquid crystal may be processed simultaneously. For example, four liquid crystal cells are processed at the same time. The optimum number of liquid crystal cells which are processed simultaneously in the same vacuum chamber may depend on the size of the liquid crystal cells.

Preferably, the evacuation of the vacuum chamber is considered to be completed if the signal indicating the amount of oxygen inside the vacuum chamber is below a predetermined threshold.

In order to determine the threshold, empirical studies may be conducted. For example, several test runs may be performed wherein the signal of the oxygen sensor is recorded and the time used for evacuating the vacuum chamber is reduced for each subsequent run. The threshold is then set to the recorded sensor value measured after completion of the evacuation for the test run which produced a correctly filled liquid crystal cell in the least amount of time. Also, the threshold may be determined by comparing the signal indicating the amount of oxygen inside the vacuum chamber to a signal of a pressure sensor mounted inside the vacuum chamber.

Alternatively or additionally to providing a predetermined threshold, the derivative of the signal may be determined and the derivative may be compared to a predetermined threshold. The derivative of the signal indicates a slope or speed of change of the signal. Preferably, the evacuation of the vacuum chamber is considered to be completed when a steep slope is detected.

If a pressure sensor is used to observe the evacuation of the vacuum chamber, the signal of the pressure sensor drops rapidly at the beginning of the evacuation process and then converges slowly towards an end pressure of the vacuum pump. Air trapped inside the cavity of the liquid crystal cells will only slowly leak out of the cavities. Completion of the evacuation process wherein essentially all air has been removed from the cavities is hardly visible in a signal of a pressure sensor.

Advantageously, the signal of the preferred oxygen sensor experiences a rapid change when essentially all air and thus oxygen has been evacuated from the cavities of the liquid crystal cells. The change in the signal provided by the oxygen sensor is easy to detect and provides a safe and reliable indication that the filling process may now continue.

Thus, by use of the proposed method it is not required to add safety margins wherein evacuation is continued for a certain amount of time even after a certain threshold pressure has been reached. This allows for more rapid process cycles as unnecessary waiting times are avoided.

When the vacuum chamber and thus the liquid crystal cells are evacuated, there are two gas flow regimes to be recognized. The first flow regime is a laminar flow regime. After a cross over pressure has been reached, a molecular flow regime is entered.

In the first flow regime, it is difficult to establish large pressure differences inside the cell: the pump down mechanism via the fill openings is a gradual one. A careful balance must be maintained between the pressure inside the cell and the vacuum chamber. As it is not possible to directly control the pressure inside the cell, the pressure of the vacuum chamber must be controlled such that a force exerted onto the substrate caused by a pressure difference between the chamber pressure and the cell pressure is not exceeding maximum load or maximum allowed stress level inside the substrate material.

The conductance in laminar flow region is characterized by the average pressure difference over the filling ports. As the absolute pressure inside the vacuum chamber is lowered, the pressure difference between the cell and the vacuum chamber is also lowered, hence the conductance becomes smaller and smaller.

Once the pressure (or rather the molecular mean free path) is in the order of the spacing of the cell, a cross over point is reached from laminar flow to the molecular flow region. The conductance in the molecular flow region is pressure independent.

Since the physical first part of the cell which enters into the molecular flow region, are the filling ports, a pressure difference now can be generated between the top part of the cell and the filling ports. The pressure difference between the chamber and cell is now always lower than the maximum allowed stress level inside the substrate material. Pumping the vacuum chamber can now be done at maximum speed/capacity of the vacuum pump.

This means that the residual air between the filling ports and the other parts inside the cell will progressively flow out of the cell, until a level is reached wherein essentially all air is removed by pumping through the filling ports. On that moment, the oxygen signal which is measured in the vacuum chamber (and which was determined by the residual gas flow from the air inside the cell) is seen to be dropping steeply. This steep drop is an indication that the cell is pumped down to an acceptable level to start the filling process with the medium.

In order to avoid large pressure difference between the inside of a liquid crystal cell and the vacuum chamber during evacuation, it is preferred to perform a primary evacuation in a pressure range of ambient pressure to an intermediate pressure in the range of from 10 mbar to 50 mbar. After completion of the primary evacuation, it is preferred to perform a secondary evacuation. During primary evacuation, a vacuum pump is operated at reduced capacity and during secondary evacuation the vacuum pump is operated at full capacity.

By performing such a controlled evacuation the maximum stress exerted onto the substrates is limited to a safe value. Optical distortions of the final liquid crystal cell due to stress in the substrates is advantageously avoided.

Vacuum pumps such as rotary vane pumps, cryopumps or scroll pumps may be used with and without combination with turbomolecular pumps.

For successful filing of the liquid crystal cells the pressure inside the vacuum chamber should not be too low in order to avoid degradation of the liquid crystals in the medium. Preferably, the pressure is greater or equal to 1.0*10⁻⁴ mbar. Thus, it is preferred that the thresholds used in conjunction with the signal of the oxygen sensor is chosen such that after the evacuation is considered to be completed, the pressure in the vacuum chamber is greater than or equal to 1.0*10⁻⁴ mbar.

The medium for filling the at least one liquid crystal cell is preferably provided in a tray which is connected to a reservoir. The tray is preferably located inside the vacuum chamber and the at least one liquid crystal cell is arranged such that the fill opening is located at the bottom so that the fill opening may be contacted with the medium inside the tray by submerging the fill opening the medium by lowering the liquid crystal cell, by raising the tray and/or by adjusting the fill level of the medium in the tray.

After the at least one fill opening of the at least one liquid crystal cell has been contacted with the medium, the pressure inside the chamber is raised. The rising pressure pushes the medium into the cavity between the substrates and the cells are filled.

Preferably, nitrogen gas or ultra clean compressed air is introduced into the vacuum chamber for raising the pressure inside the vacuum chamber.

A further aspect of the invention is providing an apparatus for filling liquid crystal cells with a medium. The apparatus comprises a vacuum chamber, a tray for holding the medium, the tray being located inside the vacuum chamber, means for submerging a fill opening of at least one liquid crystal cell in the medium, a vacuum pump, an oxygen sensor and a control unit.

The control unit is adapted and configured to carry out the steps of one of the described methods for filling liquid crystal cells with a medium. Thus, features described with respect to the method apply to the apparatus and vice versa features described with respect to the apparatus apply to the methods.

The vacuum chamber may be divided into an upper chamber and a lower chamber which may be separated by means of a gate. In such a setup, the liquid crystal cells to be filled are arranged in the upper chamber and the tray comprising the medium is arranged in the lower chamber. The upper chamber has a smaller volume than the total combined volume of the vacuum chamber which makes it easier to perform a controlled evacuation of the upper chamber and thus to evacuate the cavities inside the liquid crystal cells. After evacuation of both the upper chamber and the lower chamber is complete, the gate is opened.

The apparatus may make use of one or more vacuum pumps such as rotary vane pumps, cryopumps or scroll pumps which may be used with and without combination with one or more turbomolecular pumps.

The oxygen sensor is preferably based on a potentiometric zirconia solid electrolyte cell. Preferably, the oxygen sensor produces a signal which indicates the partial pressure of oxygen. The oxygen sensor is connected to the control unit which controls the evacuation of the vacuum chamber in response to the signal provided by the oxygen sensor.

Preferably, the means for submerging a fill opening are constructed as a mount which holds the at least one liquid crystal cell such that the fill opening is located inside the tray and means for controlling a fill level of the medium inside the tray.

Preferably, the means for submerging a fill opening of a liquid crystal cell are constructed as a lift which is configured to lower the at least one liquid crystal cell into the tray.

Alternatively or additionally, the means for submerging a fill opening of a liquid crystal cell are constructed as a lift which is configured to raise the tray such that the fill opening is located inside the tray.

The apparatus may further comprise a reservoir for supplying the medium to the tray. A valve may be used to control the supply of the medium.

Preferably, the apparatus comprises a vent valve which is configured to introduce air, nitrogen and/or ultraclean compressed air in a controlled manner into the vacuum chamber in order to raise the pressure. Preferably, an inert gas such as nitrogen is used. The vent valve may be connected to a supply for pure nitrogen or ultraclean compressed air.

The apparatus may comprise a pressure sensor for measuring the pressure inside the vacuum chamber. The pressure sensor may be used for controlling the rate at which the vacuum chamber is evacuated by the vacuum pump.

A further aspect of the invention relates to the use of an oxygen sensor in a process for filling liquid crystal cells with a medium comprising at least one liquid crystalline material. The oxygen sensor is preferably based on a potentiometric zirconia solid electrolyte cell.

### Brief description of the drawings

The drawings show:
- Figure 1a: a first embodiment of the apparatus for filing liquid crystal cells prior to submerging a fill opening in a medium comprising at least one liquid crystalline material,
- Figure 1b: the first embodiment of the apparatus after submerging the fill opening in the medium,
- Figure 2a: a second embodiment of the apparatus prior to submerging the fill opening in the medium,
- Figure 2b: the second embodiment of the apparatus after submerging the fill opening in the medium,
- Figure 3: a diagram illustrating a controlled two-stage evacuation,
- Figure 4: a diagram showing pressure and oxygen signals for a filling process using the first embodiment of the apparatus,
- Figure 5: a diagram showing pressure and oxygen signals for a filling process using the second embodiment of the apparatus,
- Figure 6a: a diagram showing the pressure for different cells, and
- Figure 6b: a diagram showing the oxygen level for different cells.

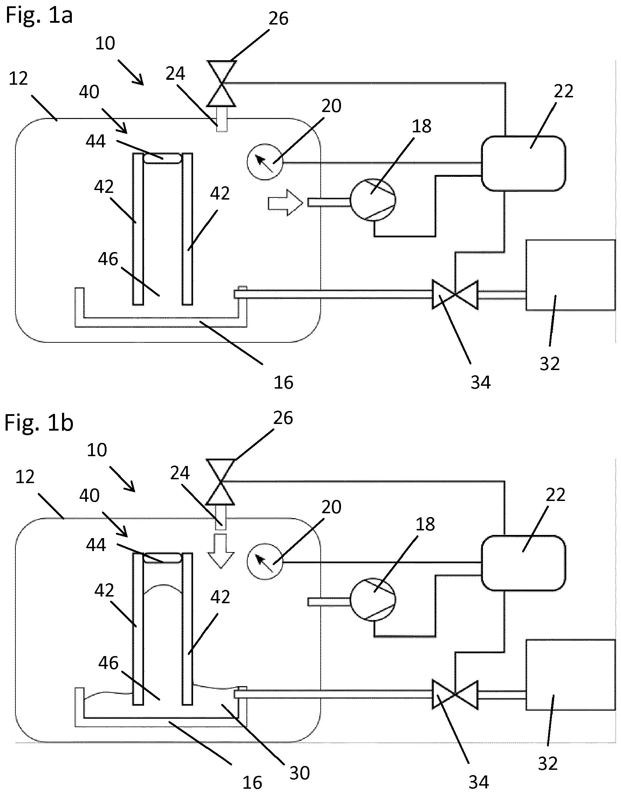

Figure 1a and 1b schematically show a first embodiment of an apparatus 10 for filling liquid crystal cells 40 with a medium 30. The apparatus 10 comprises a vacuum chamber 12 and a tray 16 for providing the medium 30 is located inside the vacuum chamber 12.

The tray 16 is connected to a reservoir which in the depicted example is a medium storage 32. A medium valve 34 is used to control supply of the medium 30 from the medium storage 32 to the tray 16.

The vacuum chamber 12 is connected to a vacuum pump 18 for evacuation the vacuum chamber 12. Both the vacuum pump 18 as well as the medium valve 34 are controlled by a control unit 22.

Preferably, evacuation of the vacuum chamber 12 is performed in two stages. In a primary evacuation stage, the vacuum pump 18 is operated at reduced power, for example by partially closing a valve for regulating pumping power (a regulating valve is not displayed in the drawings). After an ambient pressure inside vacuum chamber 12 has been reduced to below about 50 mbar, the vacuum pump 18 is operated at full power for the second evacuation stage.

An oxygen sensor 20 is arranged within the vacuum chamber 12 and is also connected to the control unit 22. Further, it is possible to arrange a pressure sensor, which is not displayed in the drawings, within the vacuum chamber 12 and this pressure sensor may also be connected to the control unit 22. A vent 24 with a vent valve 26, which is connected to the control unit 22, may be used to raise the pressure inside the vacuum chamber 12 in a controlled manner.

In the situation depicted in figure 1a, an empty liquid crystal cell 40 which is formed by two substrates 42 and a seal 44 is located in the vacuum chamber 12. A fill opening 46 is located at the bottom of the liquid crystal cell 40. The liquid crystal cell 40 is arranged such that the fill opening 46 is located below a maximum fill level of the tray 16.

In figure 1a, the vent valve 26 is closed and the vacuum pump 18 is used to evacuate the vacuum chamber 12. The completion of the evacuation is indicated by a signal provided by the oxygen sensor 20. Upon completion of the evacuation, the control unit 22 stops the vacuum pump 18 and begins the filling process by opening the medium valve 34 so that the medium 30 flows from the medium storage 32 into the tray 16. By filling the tray 16, the fill opening 46 is submerged into the medium 30 as depicted in figure 1b.

After submerging the fill opening 46 into the medium 30, the control unit 22 opens the vent valve 26 so that, for example, nitrogen may enter the vacuum chamber 12 so that the pressure inside the vacuum chamber 12 rises.

As illustrated in figure 1b, the rising pressure inside the vacuum chamber 12 pushes the medium 30 into the liquid crystal cell 40. After filling of the liquid crystal cell 40 is complete, the fill opening 46 is sealed in a subsequent process step and the liquid crystal cell 40 is completed.

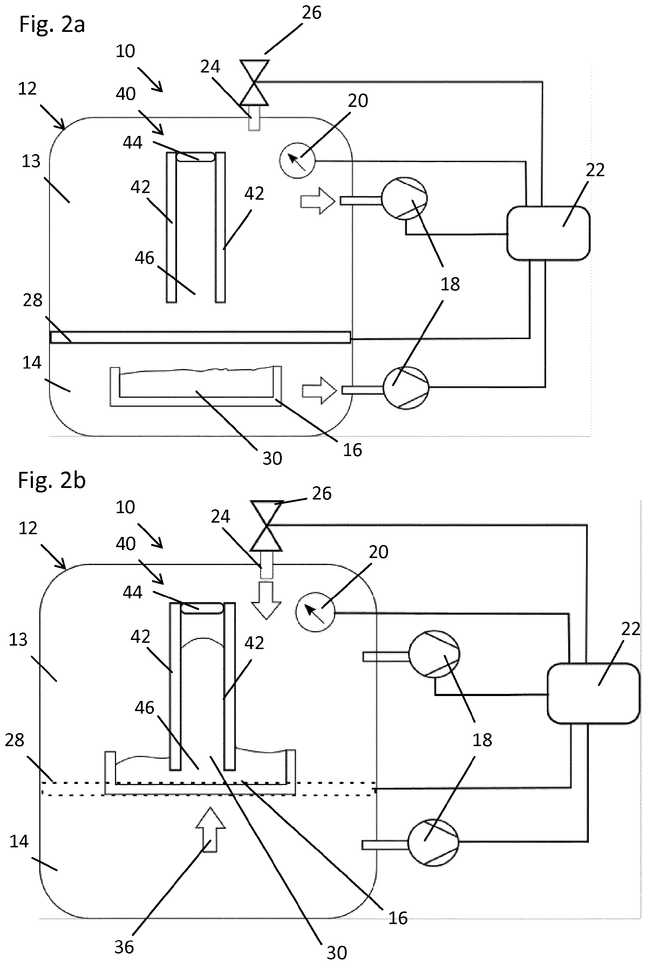

Figures 2a and 2b schematically depict a second embodiment of the apparatus 10 for filling liquid crystal cells 40 with a medium 30.

The vacuum chamber 12 of the apparatus 10 of the second embodiment is divided into an upper chamber 13 and a lower chamber 14 by means of a gate 28. Each of the two chambers 13, 14 is connected to a vacuum pump 18. Both vacuum pumps 18 are connected to the control unit 22. The oxygen sensor 20 which is used to monitor evacuation of the liquid crystal cell 40 is located in the upper chamber 13.

In the situation depicted in figure 2a, the empty liquid crystal cell 40 is located in the upper chamber 13. The tray 16 which is already filled with the medium 30 is located in the lower chamber 14 and both chambers 13 and 14 are being evacuated.

The gate 28 may be opened in order to connect the upper chamber 13 and the lower chamber 14 and to allow the fill opening 46 of the liquid crystal cell 40. By means of the division of the vacuum chamber 12, the volume surrounding the liquid crystal cell 40 is reduced which facilities evacuation of the residual air which may be trapped inside the cavity of the liquid crystal cell 40.

The gate 28 is opened when the oxygen sensor 20 indicates that the evacuation of the upper chamber 13 is complete. Preferably, a two stage evacuation is performed in the upper chamber 13 as described with respect to the first embodiment of figures 1a and 1b.

In order to contact the fill opening 46 of the liquid crystal cell 40, which is located at the bottom, with the medium 30, the tray 16 holding the medium 30 is raised by means of a lifting mechanism. Reference numeral 36 indicates the upward movement of the tray 16.

After the fill opening 46 has been contacted with the medium 30, the control unit 22 opens the vent valve 26 so that, for example, nitrogen may enter the vacuum chamber 12 so that the pressure inside the vacuum chamber 12 rises.

As illustrated in figure 2b, the rising pressure inside the vacuum chamber 12 pushes the medium 30 into the liquid crystal cell 40. After filling of the liquid crystal cell 40 is complete, the fill opening 46 is sealed in a subsequent process step and the liquid crystal cell 40 is completed.

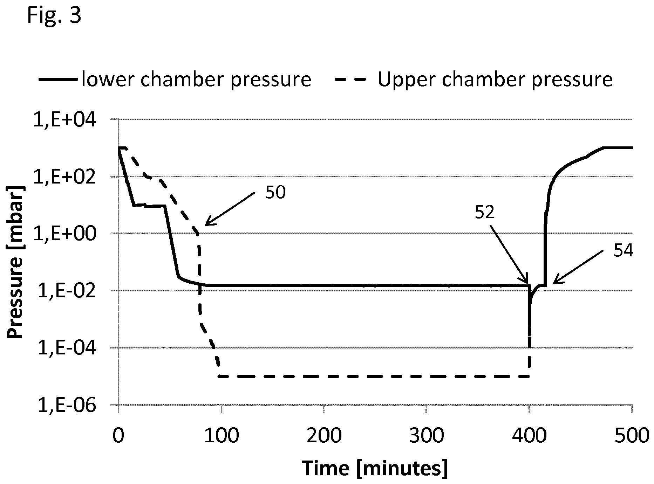

The diagram of figure 3 shows the pressure inside the upper chamber 13 and the lower chamber 14 of the second embodiment of the apparatus 10 as described with respect to figures 2a and 2b. In order to observe the pressure, further pressure sensors are arranged in the upper chamber 13 and the lower chamber 14. The x-axis of the diagram indicates the elapsed time in minutes and the y-axis indicates the measured pressure in mbar.

As described above, evacuation of the upper vacuum chamber 13 which holds the liquid crystal cell 40 is preferably performed in two stages. In the primary evacuation stage, the vacuum pump 18 is operated at reduced power. After an ambient pressure inside vacuum chamber 12 has been reduced to below about 50 mbar, the vacuum pump 18 is operated at full power for the second evacuation stage. The change from the primary evacuation stage to the secondary evacuation stage is visible in the diagram of figure 3 where at point 50 the slope of the pressure curve becomes steeper.

At point 52 as indicated in figure 3, the gate 28 is opened and thus the upper chamber 13 and the lower chamber 14 become connected. This causes pressure equalization between the two chambers 13 and 14.

At point 54, the vent valve 26 is opened and the pressure in the connected chambers 13 and 14 rises.

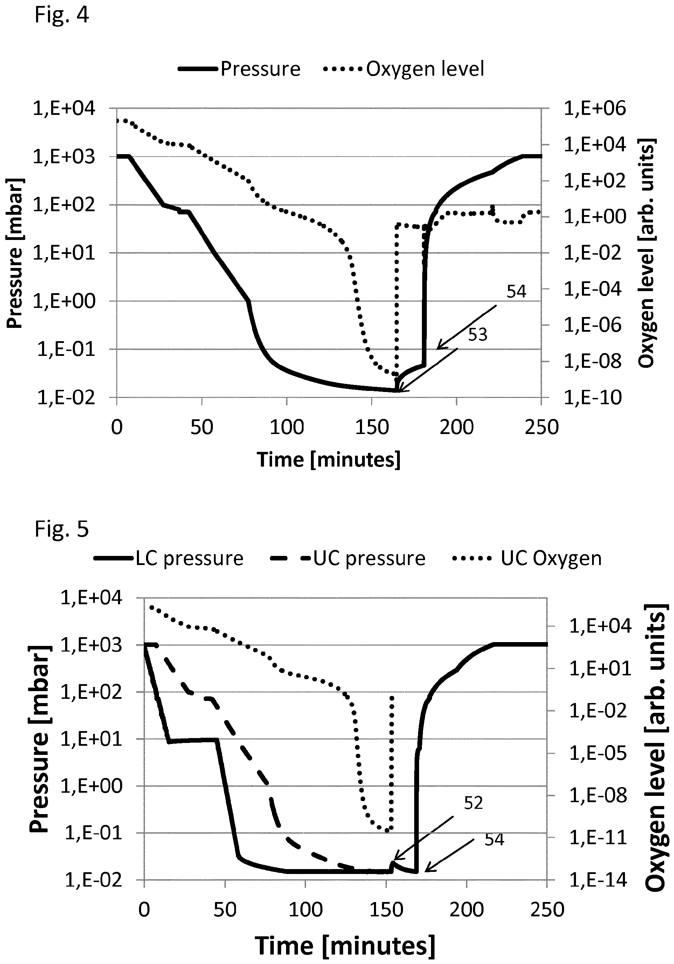

The diagram of figure 4 shows recorded signals of the oxygen sensor 20 and of an additional pressure sensor which are arranged in the vacuum chamber 12 of the apparatus 10 of the first embodiment as shown in figures 1a and 1b.The x-axis of the diagram indicates the elapsed time in minutes. The left y-axis indicates the measured pressure in mbar and the right y-axis indicates the oxygen level in arbitrary units.

During the evacuation of the vacuum chamber 12, the pressure drops rapidly at first and then begins to converge towards the final pressure of the vacuum pump 18. Even so the chamber 12 itself is evacuated rapidly, the air trapped inside the liquid crystal cell 40 only slowly leaks out through the fill opening 46. The completion of the evacuation, wherein essentially all air is evacuated from the cavity of the liquid crystal cell 40 cannot safely be determined from the signal of the pressure sensor as only small and gradual changes are observed.

The oxygen level indicated by the oxygen sensor 20, however, experiences a rapid drop which may by easily identified and indicates completion of the evacuation process. At point 53, the evacuation is considered to be complete. The vacuum pump 18 is switched off and the fill opening 46 of the liquid crystal cell 40 is submerged in the medium 30. In order to ensure that the liquid crystal cell 40 is submerged in a calm and stable medium 30, a waiting time is added before the vent step is started. At point 54, the vent valve 26 is opened and the filling process is started.

The diagram of figure 5 shows recorded signals of the oxygen sensor 20 and of additional pressure sensors which are arranged in the upper vacuum chamber 13 and the lower vacuum chamber 14 of the apparatus 10 of the second embodiment as shown in figures 2a and 2b. The x-axis of the diagram indicates the elapsed time in minutes. The left y-axis indicates the measured pressure in mbar and the right y-axis indicates the oxygen level in arbitrary units.

During the evacuation of the vacuum chambers 13 and 14, the pressure drops rapidly at first and then begins to converge towards the final pressure of the vacuum pump 18. Because the air which is trapped inside the cavity of the liquid crystal cell 40 only slowly leaks out through the fill opening 46, the pressure of the upper chamber drops slower than the pressure of the lower chamber 14. The completion of evacuation, wherein essentially all air is evacuated from the cavity of the liquid crystal cell 40 cannot safely be determined from the signal of the pressure sensor as only small and gradual changes are observed.

The oxygen level indicated by the oxygen sensor 20, however, experiences a rapid drop which may by easily identified and indicates completion of the evacuation process. At point 52, the gate 28 is opened so that the upper chamber 13 and the lower chamber 14 become connected. At point 54, the vacuum pump 18 is switched off, the vent valve 26 is opened and the filling process is started.

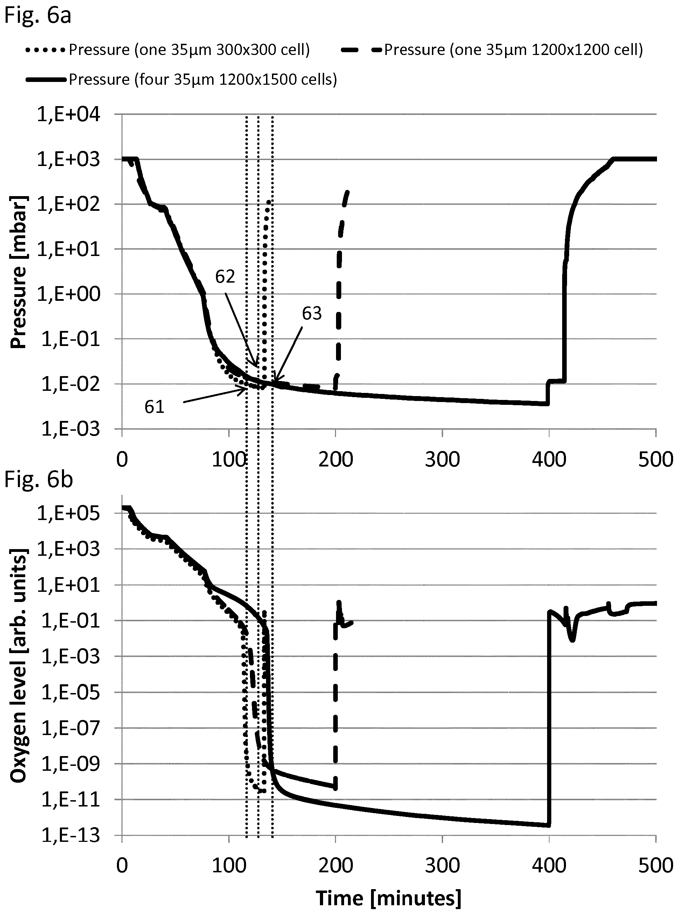

Figure 6a shows a diagram wherein the pressure during evacuation of the vacuum chamber 12 of the apparatus 10 of the first embodiment has been recorded for different types and numbers of liquid crystal cells 40. Figure 6b shows a diagram with the corresponding oxygen levels which have been recorded by the oxygen sensor 20. The x-axis of the diagrams of figures 6a and 6b indicates the elapsed time in minutes. The y-axis of figure 6a indicates the measured pressure in mbar and the y-axis of figure 6b indicates the oxygen level in arbitrary units.

A first curve, which is shown as dotted line, indicates the data recorded for one cell with substrate sizes of 300 mm x 300 mm and a cell gap of 35 µm. A second curve, which is shown as dashed line, indicates the data recorded for one cell with substrate sizes of 1200 mm x 1200 mm and a cell gap of 35 µm. A solid third curve indicates the data recorded for four cells with substrate sizes of 1200 mm x 1500 mm and a cell gap of 35 µm.

The completion of the evacuation process is indicated by the rapid drop of the oxygen level indicated by the oxygen sensor 20. As shown by the three points 61, 62 and 63, the corresponding recorded pressure levels are slowly changing and do not provide a clear indication which may be used to determine when evacuation has been completed.

In a conventional process for filling of a single cell of size 300 mm x 300 mm, the evacuation of the vacuum chamber 12 is continued until about 130 minutes have lapsed in order to ensure complete evacuation of the cavities of the cells. With the inventive process evacuation is considered to be complete after about 114 minutes as indicated by a rapid drop of the oxygen level indicated by the oxygen sensor 20 at the first point 61.

In a conventional process for filling of a single cell of size 1200 mm x 1200 mm, the evacuation of the vacuum chamber 12 is continued until about 140 minutes have lapsed in order to ensure complete evacuation of the cavities of the cells. With the inventive process evacuation is considered to be complete after about 125 minutes as indicated by a rapid drop of the oxygen level indicated by the oxygen sensor 20 at the second point 62.

In a conventional process for filling of four cells of size 1200 mm x 1500 mm, the evacuation of the vacuum chamber 12 is continued until about 400 minutes have lapsed in order to ensure complete evacuation of the cavities of the cells. With the inventive process evacuation is considered to be complete after about 140 minutes as indicated by a rapid drop of the oxygen level indicated by the oxygen sensor 20 at the third point 63.

Thus, the inventive method provides a safe way to determine completion of evacuation without having to rely on safety margins and experience of the operator. By reducing unnecessary time delays the required time for a complete process cycle is advantageously reduced.

### List of Reference numerals

- 10: apparatus
- 12: vacuum chamber
- 13: upper chamber
- 14: lower chamber
- 16: tray
- 18: vacuum pump
- 20: oxygen sensor
- 22: control unit
- 24: vent
- 26: vent valve
- 28: gate
- 30: medium
- 32: medium storage tank
- 34: medium valve
- 36: lifting motion

- 40: liquid crystal cell
- 42: substrate
- 44: seal
- 46: fill opening

- 50: point (activation of turbo pump)
- 52: point (opening of gate)
- 53: point (waiting)
- 54: point begin filling

- 61: point (pressure ok)
- 62: point (pressure ok)
- 63: point (pressure ok)

## Claims

1. Method for filling liquid crystal cells (40) with a medium (30) comprising at least one liquid crystalline material, the liquid crystal cells (40) comprising two substrates (42) joined together with a peripheral seal (44) so that a cavity is formed, wherein the liquid crystal cells (40) comprise at least one fill opening (46), the method comprising the steps of
a) placing at least one liquid crystal cell (40) inside a vacuum chamber (12),
b) evacuating the vacuum chamber (12),
c) contacting the at least one fill opening (46) with the medium (30) comprising at least one liquid crystalline material after evacuation of the vacuum chamber (12) has been completed, and
d) raising the pressure in the vacuum chamber (12), wherein the rising pressure in the vacuum chamber (12) causes the medium (30) to fill the cavity inside the at least one liquid crystal cell (40),
**characterized in that** a signal indicating the amount of oxygen remaining inside the vacuum chamber (12) is provided by means of an oxygen sensor (20) mounted inside the vacuum chamber (12) and completion of the evacuation of the vacuum chamber (12) is determined based on said signal.

2. Method according to claim 1, wherein the evacuation of the vacuum chamber (12) is considered to be completed if the signal indicating the amount of oxygen inside the vacuum chamber (12) is below a predetermined threshold.

3. Method according to claim 2, wherein the threshold is determined by comparing the signal indicating the amount of oxygen inside the vacuum chamber (12) to a signal of a pressure sensor mounted inside the vacuum chamber (12).

4. Method according to any one of claims 1 to 3, wherein a primary evacuation is performed in a pressure range of ambient pressure to an intermediate pressure in the range of from 10 mbar to 50 mbar and a secondary evacuation is performed after completion of the primary evacuation, wherein a vacuum pump (18) is operated at reduced capacity during the primary evacuation and the vacuum pump (18) is operated at full capacity during secondary evacuation.

5. Method according to any one of claims 1 to 4, wherein the pressure inside the vacuum chamber (12) after the evacuation is considered to be completed is greater than or equal to 1.0*10⁻⁴ mbar.

6. Method according to any one of claims 1 to 5, wherein the medium (30) is provided in a tray (16) located inside the vacuum chamber (12), the at least one liquid crystal cell (40) being arranged such that the fill opening (46) is at the bottom, the fill opening (46) being contacted with the medium (30) by submerging the fill opening (46) in the medium (30) by lowering the liquid crystal cell (40) or raising the tray (16).

7. Method according to any one of claims 1 to 6, wherein after the medium (30) has filled the liquid crystal cell (40), the at least one fill opening (46) is sealed.

8. Method according to any one of claims 1 to 7, wherein two or more liquid crystal cells (40) are processed simultaneously in the same vacuum chamber (12).

9. Method according to any one of claims 1 to 8, wherein nitrogen gas or ultra clean compressed air is introduced into the vacuum chamber (12) for raising the pressure inside the vacuum chamber (12).

10. Apparatus (10) for filling liquid crystal cells (40) with a medium (30) comprising at least one liquid crystalline material, the apparatus (10) comprising:
- a vacuum chamber (12),
- a tray (16) for holding the medium (30), the tray (16) being located inside the vacuum chamber (12),
- means for submerging a fill opening (46) of at least one liquid crystal cell (40) in the medium (30),
- a vacuum pump (18),
- an oxygen sensor (20),
- a control unit (22),
wherein the control unit (22) is adapted to carry out the steps of a method according to any one of claims 1 to 9.

11. Apparatus (10) according to claim 10, wherein the oxygen sensor (20) is based on a potentiometric zirconia solid electrolyte cell.

12. Apparatus (10) according to claim 10 or 11, wherein the means for submerging a fill opening (46) are constructed as a mount which holds the at least one liquid crystal cell (40) such that the fill opening (46) is located inside the tray (16) and means for controlling a fill level of the medium (30) inside the tray (16).

13. Apparatus (10) according to claim 10 or 11, wherein the means for submerging a fill opening (46) are constructed as a lift which is configured to lower the at least one liquid crystal cell (40) into the tray (16).

14. Apparatus (10) according to claim 10 or 11, wherein the means for submerging a fill opening (46) are constructed as a lift which is configured to raise the tray (16) such that the fill opening (46) is located inside the tray (16).

15. Use of an oxygen sensor (20) in a process for filling liquid crystal cells (40) with a medium (30) comprising at least one liquid crystalline material.

## Patentansprüche

1. Verfahren zum Befüllen von Flüssigkristallzellen (40) mit einem Medium (30), das mindestens ein flüssigkristallines Material enthält, wobei die Flüssigkristallzellen (40) zwei Substrate (42) umfassen, die über eine umlaufende Dichtung (44) miteinander verbunden sind, so dass ein Hohlraum gebildet wird, wobei die Flüssigkristallzellen (40) mindestens eine Einfüllöffnung (46) umfassen, wobei das Verfahren die folgenden Schritte umfasst
a) Platzieren mindestens einer Flüssigkristallzelle (40) in einer Vakuumkammer (12),
b) Evakuieren der Vakuumkammer (12),
c) Inkontaktbringen der mindestens einen Einfüllöffnung (46) mit dem Medium (30), das mindestens ein flüssigkristallines Material enthält, nachdem die Evakuierung der Vakuumkammer (12) abgeschlossen ist, und
d) Erhöhen des Drucks in der Vakuumkammer (12), wobei der Druckanstieg in der Vakuumkammer (12) bewirkt, dass das Medium (30) den Hohlraum in der mindestens einen Flüssigkristallzelle (40) füllt,
**dadurch gekennzeichnet, dass** ein Signal, das die Menge des in der Vakuumkammer (12) verbleibenden Sauerstoffs anzeigt, mittels eines in der Vakuumkammer (12) angebrachten Sauerstoffsensors (20), bereitgestellt wird und der Abschluss der Evakuierung der Vakuumkammer (12) auf der Grundlage dieses Signals bestimmt wird.

2. Verfahren nach Anspruch 1, wobei die Evakuierung der Vakuumkammer (12) als abgeschlossen gilt, wenn das Signal, das die Sauerstoffmenge in der Vakuumkammer (12) anzeigt, unter einem festgelegten Schwellenwert liegt.

3. Verfahren nach Anspruch 2, wobei der Schwellenwert durch Vergleichen des Signals, das die Sauerstoffmenge in der Vakuumkammer (12) anzeigt, mit einem Signal eines in der Vakuumkammer (12) angebrachten Drucksensors bestimmt wird.

4. Verfahren nach irgendeinem der Ansprüche 1 bis 3, wobei eine primäre Evakuierung in einem Druckbereich von Umgebungsdruck bis zu einem Zwischendruck im Bereich von 10 mbar bis 50 mbar durchgeführt wird und eine sekundäre Evakuierung nach Abschluss der primären Evakuierung durchgeführt wird, wobei eine Vakuumpumpe (18) während der primären Evakuierung mit reduzierter Leistung betrieben wird und die Vakuumpumpe (18) während der sekundären Evakuierung mit voller Leistung betrieben wird.

5. Verfahren nach irgendeinem der Ansprüche 1 bis 4, wobei der Druck in der Vakuumkammer (12), nachdem die Evakuierung als abgeschlossen gilt, größer oder gleich 1,0*10⁻⁴ mbar ist.

6. Verfahren nach irgendeinem der Ansprüche 1 bis 5, wobei das Medium (30) in einer in der Vakuumkammer (12) befindlichen Schale (16) bereitgestellt wird, wobei die mindestens eine Flüssigkristallzelle (40) so angeordnet ist, dass sich die Einfüllöffnung (46) unten befindet, wobei die Einfüllöffnung (46) mit dem Medium (30) in Kontakt gebracht wird, indem die Einfüllöffnung (46) durch Absenken der Flüssigkristallzelle (40) oder Anheben der Schale (16) in das Medium (30) eingetaucht wird.

7. Verfahren nach irgendeinem der Ansprüche 1 bis 6, wobei, nachdem das Medium (30) die Flüssigkristallzelle (40) gefüllt hat, die mindestens eine Einfüllöffnung (46) geschlossen wird.

8. Verfahren nach irgendeinem der Ansprüche 1 bis 7, wobei zwei oder mehr Flüssigkristallzellen (40) gleichzeitig in der gleichen Vakuumkammer (12) bearbeitet werden.

9. Verfahren nach irgendeinem der Ansprüche 1 bis 8, wobei Stickstoffgas oder hochreine Druckluft in die Vakuumkammer (12) eingeleitet wird, um den Druck in der Vakuumkammer (12) zu erhöhen.

10. Vorrichtung (10) zum Befüllen von Flüssigkristallzellen (40) mit einem Medium (30), das mindestens ein flüssigkristallines Material enthält, wobei die Vorrichtung (10) umfasst:
- eine Vakuumkammer (12),
- eine Schale (16) zur Aufnahme des Mediums (30), wobei sich die Schale (16) in der Vakuumkammer (12) befindet,
- Mittel zum Eintauchen einer Einfüllöffnung (46) von mindestens einer Flüssigkristallzelle (40) in das Medium (30),
- eine Vakuumpumpe (18),
- einen Sauerstoffsensor (20),
- eine Steuereinheit (22),
wobei die Steuereinheit (22) derart eingerichtet ist, die Schritte eines Verfahrens nach irgendeinem der Ansprüche 1 bis 9 auszuführen.

11. Vorrichtung (10) nach Anspruch 10, wobei der Sauerstoffsensor (20) auf einer potentiometrischen Festelektrolytzelle aus Zirkondioxid basiert.

12. Vorrichtung (10) nach Anspruch 10 oder 11, wobei die Mittel zum Eintauchen einer Einfüllöffnung (46) ausgebildet sind als Halterung, die die mindestens eine Flüssigkristallzelle (40) derart hält, dass sich die Einfüllöffnung (46) in der Schale (16) befindet, und als Mittel zum Steuern eines Füllstands des Mediums (30) in der Schale (16).

13. Vorrichtung (10) nach Anspruch 10 oder 11, wobei die Mittel zum Eintauchen einer Einfüllöffnung (46) als Hebevorrichtung ausgebildet sind, die so konfiguriert ist, die mindestens eine Flüssigkristallzelle (40) in die Schale (16) abzusenken.

14. Vorrichtung (10) nach Anspruch 10 oder 11, wobei die Mittel zum Eintauchen einer Einfüllöffnung (46) als Hebevorrichtung ausgebildet sind, die so konfiguriert ist, die Schale (16) anzuheben, so dass sich die Einfüllöffnung (46) in der Schale (16) befindet.

15. Verwendung eines Sauerstoffsensors (20) in einem Verfahren zum Befüllen von Flüssigkristallzellen (40) mit einem Medium (30), das mindestens ein flüssigkristallines Material enthält.

## Revendications

1. Procédé pour remplir des cellules de cristaux liquides (40) avec un milieu (30) qui comprend au moins un matériau cristallin liquide, les cellules de cristaux liquides (40) comprenant deux substrats (42) qui sont joints ensemble à l'aide d'un joint périphérique (44) de telle sorte qu'une cavité soit formée, dans lequel les cellules de cristaux liquides (40) comprennent au moins une ouverture de remplissage (46), le procédé comprenant les étapes de
a) placement d'au moins une cellule de cristaux liquides (40) à l'intérieur d'une chambre à vide (12),
b) création d'un vide dans la chambre à vide (12),
c) mise en contact de l'au moins une ouverture de remplissage (46) avec le milieu (30) qui comprend au moins un matériau cristallin liquide après que la création d'un vide dans la chambre à vide (12) a été terminée, et
d) augmentation de la pression dans la chambre à vide (12), dans lequel la pression qui augmente dans la chambre à vide (12) a pour effet que le milieu (30) remplit la cavité à l'intérieur de l'au moins une cellule de cristaux liquides (40),
**caractérisé en ce qu'**un signal qui indique la quantité d'oxygène qui reste à l'intérieur de la chambre à vide (12) est fourni au moyen d'un capteur d'oxygène (20) qui est monté à l'intérieur de la chambre à vide (12) et l'achèvement de la création d'un vide dans la chambre à vide (12) est déterminé sur la base dudit signal.

2. Procédé selon la revendication 1, dans lequel la création d'un vide dans la chambre à vide (12) est considérée comme étant terminée si le signal qui indique la quantité d'oxygène à l'intérieur de la chambre à vide (12) est en-deçà d'un seuil prédéterminé.

3. Procédé selon la revendication 2, dans lequel le seuil est déterminé en comparant le signal qui indique la quantité d'oxygène à l'intérieur de la chambre à vide (12) à un signal d'un capteur de pression qui est monté à l'intérieur de la chambre à vide (12).

4. Procédé selon l'une quelconque des revendications 1 à 3, dans lequel la création d'un vide primaire est effectuée dans une plage de pressions qui va de la pression environnante à une pression intermédiaire dans la plage qui va de 10 mbar à 50 mbar et la création d'un vide secondaire est effectuée après l'achèvement de la création du vide primaire, dans lequel une pompe à vide (18) est actionnée à capacité réduite pendant la création du vide primaire et la pompe à vide (18) est actionnée à pleine capacité pendant la création du vide secondaire.

5. Procédé selon l'une quelconque des revendications 1 à 4, dans lequel la pression à l'intérieur de la chambre à vide (12) après que la création du vide est considérée comme étant terminée est supérieure ou égale à 1,0*10⁻⁴ mbar.

6. Procédé selon l'une quelconque des revendications 1 à 5, dans lequel le milieu (30) est fourni dans un plateau (16) qui est situé à l'intérieur de la chambre à vide (12), l'au moins une cellule de cristaux liquides (40) étant agencée de telle sorte que l'ouverture de remplissage (46) soit au niveau du fond, l'ouverture de remplissage (46) étant mise en contact avec le milieu (30) par submersion de l'ouverture de remplissage (46) dans le milieu (30) en abaissant la cellule de cristaux liquides (40) ou en relevant le plateau (16).

7. Procédé selon l'une quelconque des revendications 1 à 6, dans lequel, après que le milieu (30) a rempli la cellule de cristaux liquides (40), l'au moins une ouverture de remplissage (46) est scellée.

8. Procédé selon l'une quelconque des revendications 1 à 7, dans lequel deux cellules de cristaux liquides ou plus (40) sont traitées simultanément dans la même chambre à vide (12).

9. Procédé selon l'une quelconque des revendications 1 à 8, dans lequel du gaz azote ou de l'air comprimé ultra-propre est introduit à l'intérieur de la chambre à vide (12) pour augmenter la pression à l'intérieur de la chambre à vide (12).

10. Appareil (10) pour remplir des cellules de cristaux liquides (40) avec un milieu (30) qui comprend au moins un matériau cristallin liquide, l'appareil (10) comprenant :
- une chambre à vide (12),
- un plateau (16) pour contenir le milieu (30), le plateau (16) étant situé à l'intérieur de la chambre à vide (12),
- un moyen pour submerger une ouverture de remplissage (46) d'au moins une cellule de cristaux liquides (40) dans le milieu (30),
- une pompe à vide (18),
- un capteur d'oxygène (20),
- une unité de commande (22),
dans lequel l'unité de commande (22) est adaptée pour mettre en oeuvre les étapes d'un procédé selon l'une quelconque des revendications 1 à 9.

11. Appareil (10) selon la revendication 10, dans lequel le capteur d'oxygène (20) est basé sur une cellule d'électrolyte solide en zircone potentiométrique.

12. Appareil (10) selon la revendication 10 ou 11, dans lequel le moyen pour submerger une ouverture de remplissage (46) est construit en tant qu'un support qui maintient l'au moins une cellule de cristaux liquides (40) de telle sorte que l'ouverture de remplissage (46) soit située à l'intérieur du plateau (16) et un moyen pour commander un niveau de remplissage du milieu (30) à l'intérieur du plateau (16).

13. Appareil (10) selon la revendication 10 ou 11, dans lequel le moyen pour submerger une ouverture de remplissage (46) est construit en tant que moyen de levage qui est configuré pour abaisser l'au moins une cellule de cristaux liquides (40) à l'intérieur du plateau (16).

14. Appareil (10) selon la revendication 10 ou 11, dans lequel le moyen pour submerger une ouverture de remplissage (46) est construit en tant que moyen de levage qui est configuré pour relever le plateau (16) de telle sorte que l'ouverture de remplissage (46) soit située à l'intérieur du plateau (16).

15. Utilisation d'un capteur d'oxygène (20) dans un processus pour remplir des cellules de cristaux liquides (40) avec un milieu (30) qui comprend au moins un matériau cristallin liquide.
